# EUROPEAN PATENT APPLICATION

(11) **EP 2 958 069 A1**
(43) Date of publication of application: **23.12.2015**
(21) Application number: 15001778.8
(22) Date of filing: 16.06.2015
(51) Int. Cl.: G06Q 30/02

(54) **A METHOD FOR ENCOURAGING SOCIAL CONSUMPTION OF COUPONS**

(30) Priority: 16.06.2014 IL 23316814
(71) Applicant: Deutsche Telekom AG, 53113 Bonn (DE)
(72) Inventor: Katz, Gilad, Rehovot (IL); Shabtai, Asaf, Ness Ziona (IL); Ketabdar, Hamed, 10555 Berlin (DE); Prohl, Matthias, 50674 Köln (DE)
(74) Representative: Graf von Stosch, Andreas

(57) **Abstract**

The invention is a recommendation process that can be used by operators of a coupon recommendation system to utilize information about the social interactions between users of mobile devices in order to supply coupons to users who are potential customers of a business in a manner that maximizes the chances that the offered coupon will be consumed.

## Description

### Field of the Invention

The invention is from the fields of marketing and mobile communication. Specifically the invention is related to coupon recommendation systems for mobile devices.

### Background of the Invention

A coupon is a document provided by a retailer, manufacturer, or service provider to potential customers that can be exchanged for a discount when purchasing a product or service. The purpose of the coupon is to attract price conscious consumers to buy specific products and/or to attract new customers. Originally coupons were printed in newspapers, magazines, or on the packaging of goods and the customer would cut them out and take them to the retail store/s specified on the coupon to be redeemed. In recent years with the development of the internet, and more recently mobile communication services, coupons are more and more being distributed in electronic form.

Smart mobile devices, being small computers that are always connected to the internet and carried by consumers, are increasingly being used for context-based recommendation. Existing applications for mobile devices push messages and coupons to the device owner mainly based on his location. However the mobile devices comprise sensors that provide mobile service providers with a great deal more information than just the location of the device holder. In addition information about a specific user's social connections, e.g. "friends" from social networks, is readily available.

It is a purpose of the present invention to allow mobile communication device service providers to make use of the information available to them about a potential customer's social connections in order to recommend to businesses coupons that can be proposed to consumers, so that overall coupon consumption is maximized.

Further purposes and advantages of this invention will appear as the description proceeds.

### Summary of the Invention

In a first aspect the invention is a method of maximizing the chances that a user will redeem a coupon offered to him by the operator of a coupon recommendation system via the user's mobile communication device. The method comprises using system information on friends of the user in the recommendation method employed by the coupon recommendation, wherein the friends of the user are persons with whom the user interacts socially at various levels.

In embodiments of the method of the invention the information on friends of the user is gathered by the operators of the coupon recommendation system from at least one of the following sources: internet search engines, online social networks, geographical co-occurrence, the user who feeds information directly into the coupon application on his/her mobile device, logs of incoming and outgoing phone calls and SMS messages and contact lists on the user's mobile device, employee lists at the user's place of employment, and student lists at the user's school/university.

In embodiments of the method of the invention when a user views the available coupons that have been sent to him by the recommendation service on an application on his phone, he will see the details of the coupon and also the names of friends to which a similar offer has been made.

In embodiments of the method of the invention when a user is proposed a coupon along with a list of names of friends who received similar coupons, he is informed that if some or all of the offered coupons are consumed together, a larger discount will be granted. The size of the discount can be dependent on the number of coupons consumed at the same time.

In embodiments of the method of the invention a user that receives an original coupon directly from the coupon recommendation service is able to grant copies of the coupon offered to him/her to additional users who did not receive it directly from the coupon recommendation service. In these embodiments, for each additional user who receives and uses the coupon granted to him/her, the discount to the user who granted the coupon may grow up to a predetermined maximum value. In these embodiments users who receive a granted coupon from another user are able to grant it to other users as well. In these embodiments only a predefined number of users who did not receive an original coupon may be able to grant it to other users. In these embodiments an additional discount for each additional granted coupon may be divided between the user who received the original coupon and the users who redistributed the coupon.

In a second aspect the invention is a system for executing the method of the first aspect. The system comprises:
a. a mobile communication device service provider' network;
b. a coupon application running on a user's mobile communication device, the application adapted for collecting and sending data gathered from sensors on the device and interacting with the user showing him coupons recommended by the system;
c. a database that contains all user data;
d. an analytics services module that is adapted to derive high level useful information from the sensor data and from data sources that are external to the system;
e. a recommendation algorithm module adapted to execute the actual logic of the method of coupon recommendation including processing information derived by the analytics services module, selecting the best offer for a specific user in a specific context, and updating the recommendation model based on previous offers and consumptions; and
f. A friends module, which draws information from the database and the analytic services module to compile a list of friends of the user who also have the coupon application on their mobile communication devices.

In embodiments of the system of the invention the compiled list of friends of the user are stored for future use.

In embodiments of the system of the invention the compiled list of friends of the user is comprised of multiple sub-lists of friends.

In embodiments of the system of the invention the coupon application is adapted to allow a user to grant coupons that have been offered to him to other users that also have the coupon application on their mobile communication devices.

In embodiments of the system of the invention after the recommendation algorithm module determines to send a coupon to a user, the system performs the following steps:
a. the recommendation algorithm module sends a query to the friends module requesting a list or sub-list of friends of the user;
b. the friends module sends the requested list, which it either constructs in real time or retrieves from an internal database;
c. the recommendation algorithm module then reviews the coupons that it has recently sent to see if any of the names on the list returned to it by the friends module have already received coupons similar to that which it intends to send to the user and executes its recommendation process on the names on the list to determine if coupons similar to the one it intends to send to the user could also be sent to other selected friends;
d. the recommendation algorithm module sends the coupon and the names of friends selected in step "c" that will receive or have received similar coupons to the application on the user's mobile device; and
e. the recommendation algorithm module sends similar coupons and the names of all persons that will receive them to applications on the mobile devices of the friends selected in step "c".

All the above and other characteristics and advantages of the invention will be further understood through the following illustrative and non-limitative description of embodiments thereof, with reference to the appended drawings.

### Brief Description of the Drawings

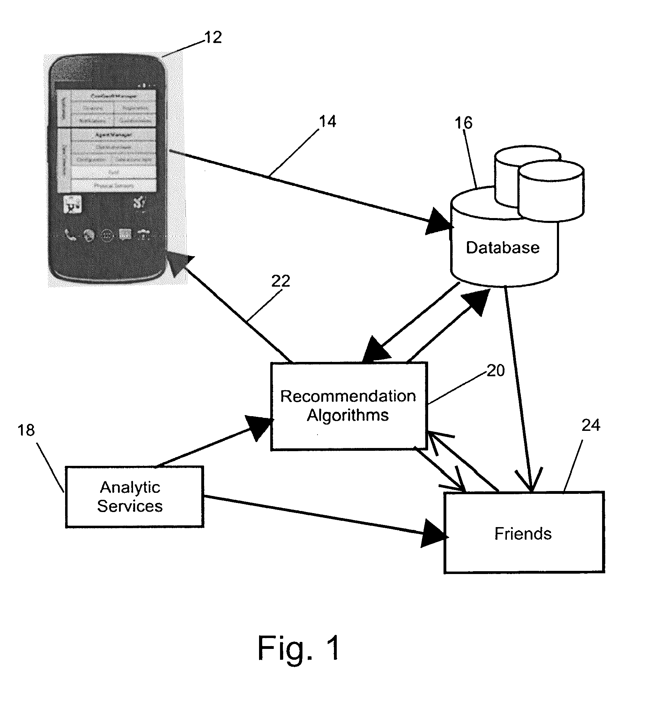

- Fig. 1 schematically shows the main components of the system that executes the method of the invention.

### Detailed Description of Embodiments of the Invention

The invention is a recommendation process that can be used by operators of a coupon recommendation system to utilize information about the social interactions between users of mobile devices in order to supply coupons to users who are potential customers of a business in a manner that maximizes the chances that the offered coupon will be consumed.

The invention is utilized by operators of a coupon recommendation system for mobile devices (phones and other portable devices). These mobile devices comprise sensors that provide information about the users' location but may also include many other attributes such as degree of activity, application used, communication behavior, position of the phone etc. The recommendation system makes use of this information supplied and other information gathered from other sources, e.g. the database of the internet provider, to make coupons available for nearby businesses to users through an application installed on the user's mobile device. The method by which the coupon recommendation system decides to offer coupons to a specific potential customer of a specific business at a specific time and for a specific amount is not relevant to the present invention, which is an added feature to an existing system that improves the likelihood that the offered coupon will be consumed, i.e. used by the person to which it has been offered. An example of a coupon recommendation system that can benefit from the present invention is disclosed in co-pending Israeli Patent Application IL232180 by the applicant of the present application.

In addition to information of the type described above, which is used in their existing recommendation method, information on persons with whom each user interacts socially at various levels (collectively referred to herein as "friends") is readily available to the operators of a coupon recommendation system. This information may be retrieved from internet search engines, online social networks, inferred by geographical co-occurrence, fed directly by the user into the coupon application on his mobile device, from incoming and outgoing phone calls and SMS messages, contact lists, employee lists at the user's place of employment, relatives, etc. The recommendation process of the present invention utilizes this social information to maximize the chances that the user will redeem the offered coupon.

Fig. 1 schematically shows the main components of the system that executes the method of the invention. These components are:
- A coupon application running on a user's mobile communication device 12. The application is responsible for collecting and sending sensor and other data from device 12 to a database and also interacts with the user showing him coupons recommended by the system and, in an embodiment of the present invention allows him to offer coupons that have been offered to him to other users that also have the coupon application on their mobile communication devices.
- Sensor and other data 14 sent from mobile device 12 to the system Database 16.
- A Database 16 that contains all user data including, for example, sensor information, e.g. current location, number and frequency of social messages (SMS, Whatsup, etc.), applications used, and current activity (speaking, texting, working, attending a sporting event, etc.); and other more specific information, e.g. numbers from the mobile device call log and names from the contact list, that can be used to compile a list of the user's friends; and coupon information, e.g. coupons offered and coupons consumed.
- An Analytics Services module 18, which is a component that is responsible for deriving high level useful information from the sensor data. For example, based on the analysis of the data collected for a duration of one month from the activity sensor, which indicates the level of activity and direction of travel of the mobile phone, this component can derive with a high level of certainty that the user owns a car.

The Analytics Services module also includes data sources that are external to the system, e.g., current weather from an external web site and sources that can be used to compile the list of the user's friends, e.g. Facebook, Twitter, and the web site of the user's place of employment or school/university.
- A Recommendation Algorithm module 20, which executes the actual logic that determines the properties, e.g. name of the business, type of product or service, amount of discount, and time of sending, of the coupon that should be sent to the application on the user's device. The input to this module includes the information derived by the Analytics Services module 18. The Recommendation Algorithm module 20 processes the information and selects the best offer 22 for the specific customer. This module is also responsible of updating the recommendation model based on previous offers and consumptions.
- A Friends module 24, which draws information from database 16 and analytic services module 18 to compile and, in an embodiment store for future use, a list of friends of the user who also have the coupon application on their mobile communication devices. The list may advantageously be comprised of multiple sub-lists divided, for example by interest into a sub-list of friends with whom the user frequently dines out, a sub-list of friends that attend sporting events with the user, etc.

The system described herein is basically that used to carry out the recommendation method described in the above referenced patent application IL232180 and more details of how the Recommendation Algorithms module 20 and the Analytical Services module 18 perform their functions can be found in that patent application. However it is to be noted that, according to the present invention, any other existing coupon recommendation method can be adapted and its performance improved in a similar way by addition of a Friends module 24.

After the Recommendation Algorithm module 20 determines to send a coupon to user A, the Recommendation Algorithm module 20 sends a query to Friends Module 24, which returns a list or sub-list of friends of user A. Friends Module 24 can either construct the friends list in real time when requested or retrieve a previously prepared list from an internal database. The stored lists and sub-lists can be continuously or periodically updated by data supplied from the Database 16 or Analytic Services module 18. In order to keep the system running efficiently the Friends Module can comprise algorithms that filter the data to limit the lists to a predetermined number of closest friends, e.g. five or ten.

The Recommendation Algorithm module then reviews the coupons that it has recently sent to see if any of the names on the list returned to it by the Friend's module have received coupons similar to that which it intends to send to user A and executes its recommendation process on the names on the list to determine if coupons similar to the one it intends to send to user A could be sent to other selected friends of user A. If suitable users are identified, then Recommendation Algorithm module 20 sends the respective coupons to the applications on user A's and his selected friends' mobile devices.

When user A views the available coupons on the application on his phone, he will not only see the details of the discount, i.e. the size of the discount, location of the business, etc., but also the names of friends to which a similar offer has been made, wherein by similar is meant a coupon to the same business, but possibly with different terms. Similarly each of the selected friends will see details of the details of their friends (including user A) who received offers to the same business.

The use of sub-lists obviously makes the system much more efficient since, for example, if user A receives a coupon with a discount to attend a basketball game, it would not be useful to send similar coupons to friends with whom user A attends orchestral concerts but never sporting events.

Providing a user with information about friends that have been offered similar coupons will induce him to actively seek these friends and arrange to meet them at the business offering the coupons, thereby increasing coupon usage.

In an embodiment of the invention, when a user is proposed a coupon along with a list of names of friends who received similar coupons, he is informed that if some or all of the offered coupons are consumed together, a larger discount will be granted - the size of the discount can be dependent on the number of coupons consumed at the same time. This will increase the likelihood of users actively engaging their friends and suggesting joint consumption.

In another embodiment, the users are able to "grant" copies of the coupon offered to them to additional users who did not receive it directly from the coupon recommendation service. With each additional user who receives (and uses) the coupon, the discount to the user who "granted" the coupon would grows up to a predetermined maximum value. In addition, it would be possible for users who received the coupon from another user to "grant" it to other users as well (this would be possible up to a predefined number as times). The "reward" for each additional granted the coupon can be divided between the user who received the original coupon and the users who redistributed the coupon. This embodiment of the invention is likely to make users "active marketing agents", inducing them to actively engage their friends (and even non-related persons who have the application on their mobile devices) and suggest joint consumption at the relevant business. Although embodiments of the invention have been described by way of illustration, it will be understood that the invention may be carried out with many variations, modifications, and adaptations, without exceeding the scope of the claims.

## Claims

1. A method of maximizing the chances that a user will redeem a coupon offered to him by the operator of a coupon recommendation system via the user's mobile communication device, said method comprising using information on friends of the user in the recommendation method employed by the coupon recommendation system, wherein the friends of the user are persons with whom the user interacts socially at various levels.

2. The method of claim 1, wherein the information on friends of the user is gathered by the operators of a coupon recommendation system from at least one of the following sources: internet search engines, online social networks, geographical co-occurrence, the user who feeds information directly into the coupon application on his/her mobile device, from logs of incoming and outgoing phone calls and SMS messages and contact lists on the user's mobile device, employee lists at the user's place of employment, and student lists at the user's school/university.

3. The method of claim 1, wherein, when a user views the available coupons that have been sent to him by the recommendation service on an application on his phone, he will see the details of the coupon and also the names of friends to which a similar offer has been made.

4. The method of claim 1, wherein when a user is proposed a coupon along with a list of names of friends who received similar coupons, he is informed that if some or all of the offered coupons are consumed together, a larger discount will be granted.

5. The method of claim 4, wherein the size of the discount is dependent on the number of coupons consumed at the same time.

6. The method of claim 1, wherein a user that receives an original coupon directly from the coupon recommendation service is able to grant copies of the coupon offered to him/her to additional users who did not receive it directly from the coupon recommendation service.

7. The method of claim 6, wherein for each additional user who receives and uses the coupon granted to him/her, the discount to the user who granted the coupon grows up to a predetermined maximum value.

8. The method of claim 6, wherein users who receive a granted coupon from another user are able to grant it to other users as well.

9. The method of claim 8, wherein only a predefined number of users who did not receive an original coupon are able to grant it to other users.

10. The method of claim 8, wherein an additional discount for each additional granted coupon is divided between the user who received the original coupon and the users who redistributed the coupon.

11. A system for executing the method of claim 1, the system comprising:
a. a mobile communication device service provider' network;
b. a coupon application running on a user's mobile communication device, the application adapted for collecting and sending data gathered from sensors on the device and interacting with the user showing him coupons recommended by the system;
c. a database that contains all user data;
d. an analytics services module that is adapted to derive high level useful information from the sensor data and from data sources that are external to the system;
e. a recommendation algorithm module adapted to execute the actual logic of the method of coupon recommendation including processing information derived by the analytics services module, selecting the best offer for a specific user in a specific context, and updating the recommendation model based on previous offers and consumptions; and
f. A friends module, which draws information from the database and the analytic services module to compile a list of friends of the user who also have the coupon application on their mobile communication devices.

12. The system of claim 11, wherein the compiled list of friends of the user are stored for future use.

13. The system of claim 11, wherein the compiled list of friends of the user is comprised of multiple sub-lists of friends.

14. The system of claim 11, wherein the coupon application is adapted to allow a user to grant coupons that have been offered to him to other users that also have the coupon application on their mobile communication devices.

15. The system of claim 11, wherein, after the recommendation algorithm module determines to send a coupon to a user, the system performs the following steps:
a. the recommendation algorithm module sends a query to the friends module requesting a list or sub-list of friends of the user;
b. the friends module sends the requested list, which it either constructs in real time or retrieves from an internal database;
c. the recommendation algorithm module then reviews the coupons that it has recently sent to see if any of the names on the list returned to it by the friends module have already received coupons similar to that which it intends to send to the user and executes its recommendation process on the names on the list to determine if coupons similar to the one it intends to send to the user could also be sent to other selected friends;
d. the recommendation algorithm module sends the coupon and the names of friends selected in step "c" that will receive or have received similar coupons to the application on the user's mobile device; and
e. the recommendation algorithm module sends similar coupons and the names of all persons that will receive them to applications on the mobile devices of the friends selected in step "c".
